# EUROPÄISCHE PATENTANMELDUNG

(11) **EP 0 865 216 A2**
(43) Veröffentlichungstag der Anmeldung: **16.09.1998**
(21) Anmeldenummer: 98104533.9
(22) Anmeldetag: 13.03.1998
(51) Int. Cl.: H04Q 7/22, H04Q 3/64

(54) **Verfahren und Einrichtung zum Aufbau einer Wählverbindung zwischen zwei Telekommunikationsendgeräten**

(30) Priorität: 14.03.1997 DE 19710655
(71) Anmelder: Talkline GmbH, 25337 Elmshorn (DE)
(72) Erfinder: Danneboom, Dieter, 24558 Henstedt-Ulzburg (DE)
(74) Vertreter: Meyer, Ludgerus A., Dipl.-Ing.

(57) **Zusammenfassung**

Die Erfindung betrifft ein Verfahren zum Aufbau einer Wählverbindung zwischen zwei Telekommunikationsendgeräten (4, 5) über wenigstens zwei Netzbetreiber, insbesondere Mobilfunknetzbetreiber. Das Endgerät (5) des Nutzers enthält eine zweite Gesprächstaste die insbesondere die Zugangsnummer und Zugangsdaten eines zweiten Netzbetreibers (2) selbsttätig aussendet, so daß eine Wählverbindung unter Nutzung des Netzes des zweiten Netzbetreibers selbsttätig aufgebaut werden kann. Damit ist es beispielsweise unter Ausnutzung von 0130-Nummern möglich, kostengünstige Wählverbindungen aufzubauen, ohne daß dem Nutzer kompliziertere Zugangsprozeduren aufgebürdet werden.

## Beschreibung

Die Erfindung betrifft ein Verfahren zum Aufbau einer Wählverbindung zwischen zwei Telekommunikationsendgeräten sowie eine Einrichtung zur Durchführung eines derartigen Verfahrens.

Die Punkt-zu-Punkt-Telekommunikation wird heute im wesentlichen durch Telekommunikationsnetze weniger nationaler und/oder internationaler Netzbetreiber bestimmt, die Festnetze und/oder Mobilfunknetze betreiben. Der Anteil der Mobilfunkteilnehmer ist in den letzten Jahren stark angestiegen. Trotz unbestrittener Vorteile der mobilen Kommunikation sind jedoch nach wie vor die Kosten der Nutzung mobiler Kommunikation erheblich höher als die Kosten der Nutzung von Festnetzen. Da eine mobile Kommunikation einen erheblich höheren technischen Erhaltungsaufwand zum Betrieb des Netzes und die Zurverfügungstellung der Dienste in allen geographischen Bereichen erfordert, haben die Netzbetreiber eine Vielzahl von Tarifgestaltungen entwickelt, um einerseits die Kosten zu decken und andererseits dem Nutzer die Möglichkeit zu bieten, eine Tarifstruktur entsprechend seinem Nutzungsverhalten auszuwählen. Da der Mobilfunk-Telekommunikationsmarkt ferner im wesentlichen privat organisiert ist, werden den Nutzern weitere Tarifdifferenzierungen angeboten.

Neben nationalen Netzbetreibern, denen jeweils noch mehrere sogenannte Serviceprovider zugeordnet sind, existieren in anderen Ländern weitere Netzbetreiber, denen aufgrund geographisch, politisch oder technisch anderer Voraussetzungen Betriebsbedingungen möglich sind, die den nationalen Netzbetreibern u. U. nicht zur Verfügung stehen. Um auch nationalen Kunden Tarifstrukturen von ausländischen Netzbetreibern zur Verfügung stellen zu können, wurden bereits verschiedene Möglichkeiten zur Einbindung ausländischer Netzbetreiber in den Aufbau einer Telekommunikationsverbindung vorgeschlagen.

Eine bekannte Möglichkeit besteht darin, daß der nationale Nutzer, der eine Telekommunikationsverbindung aufbauen möchte, zunächst einen ausländischen Netzbetreiber anwählt, der nach Rückruf beim Kunden die gewünschte Verbindung aufbaut, wobei dem Kunden unmittelbar lediglich die Anrufkosten beim ausländischen Netzbetreiber entstehen, sofern nicht darüber hinaus kostenfreie Zugangsnummern verwendet werden. Die eigentliche Abrechnung des Kunden erfolgt seitens des ausländischen Netzbetreibers.

Eine andere bekannte Möglichkeit besteht darin, daß dem nationalen Kunden eine sogenannte Callingcard zur Verfügung gestellt wird, die Codes enthält, um einen anderen Teilnehmern unter Hinzufügung des Codes der Callingcard anrufen zu können. Der Anruf beim ausländischen Netzbetreiber erfolgt dabei in der Regel über kostenfreie Zugangsnummern.

Die vorstehenden Anrufvarianten werden hauptsächlich dann genutzt, wenn internationale Verbindungen aufgebaut werden sollen und die Kosten des nationalen in der Regel einzubindenden Netzbetreibers erheblich höher sind als die Kosten eines verwendbaren ausländischen Netzbetreibers.

Die vorgenannten Möglichkeiten erfordern es, daß der Nutzer neben der anzuwählenden Teilnehmernummer entweder einen Rückruf des ausländischen Netzbetreibers abwarten muß oder beim Wählvorgang eine Reihe von zusätzlichen Codedaten einzugeben hat. Beides ist bezüglich Zeitdauer und Fehleranfälligkeit zum Aufbau einer Teilnehmerverbindung umständlich. Ferner erfordert dies, daß die Abrechnung der Nutzungsdaten über einen vom Einstiegsnetz unabhängigen Netzbetreiber erfolgt.

Eine dritte Möglichkeit der Kostenreduzierung liegt in der Verwendung des sogenannten "Least cost routing", bei dem, insbesondere bei größeren Endgeräteeinrichtungen des nationalen Kunden, eine Verteilereinheit vorgesehen ist, die je nach angewähltem Ziel den kostengünstigsten Verbindungsweg über verschiedene Netze auswählt.

Die letztgenannte Möglichkeit erfordert einen hohen apparatemäßigen Aufwand und ist nur für umfangreiche Endgeräteeinrichtungen einzusetzen.

Der Erfindung liegt die Aufgabe zugrunde, ein Verfahren zum Aufbau einer Wählverbindung zwischen zwei Telekommunikationsendgeräten anzugeben, das es dem Nutzer ermöglicht, im wesentlichen ohne zusätzliche Dateneingaben eine unmittelbare Verbindung zum anzuwählenden Teilnehmer herzustellen und bei dem sich die Nutzungskosten für den Nutzer ohne großen Aufwand reduzieren lassen. Der Erfindung liegt auch die Aufgabe zugrunde, ein Endgerät anzugeben, das in der Lage ist, das angegebene Verfahren zu nutzen.

Diese Aufgaben werden durch die in den Ansprüchen 1 und 7 angegebene Erfindung gelöst. Vorteilhafte Weiterbildungen der Erfindung sind in Unteransprüchen angegeben.

Das erfindungsgemäße Verfahren zeichnet sich dadurch aus, daß zum Aufbau einer Telekommunikationsverbindung zwischen zwei Endgeräten das Netz eines zweiten Netzbetreibers, beispielsweise eines ausländischen Netzvertreibers, mit entsprechend ausgewählter Tarifstruktur verwendet wird, ohne daß der Nutzer einen erhöhten Bedienungsaufwand zu betreiben hat.

Insbesondere wird durch das Endgerät des die Verbindung aufbauenden Nutzers selbsttätig die Zugangsnummer des zweiten Netzbetreibers angewählt, wobei dieses Netz nach Empfang eines Zugangscodes eine Freigabe des Zugangsdienstes des die Verbindung aufbauenden Endgerätes herstellt. Dann folgt die Anwahl des zweiten Endgerätes durch den zweiten Netzbetreiber. Die Anwahl des Telekommunikationsnetzes des zweiten Netzbetreibers erfolgt dabei vorzugsweise über ein drittes Telekommunikationsnetz, das eine kostenfreie oder kostengünstige Durchschaltung zum Netz des zweiten Netzbetreibers ermöglicht. Die Verbindung kann dann vom zweiten Netzbetreiber zum anzuwählenden Endgerät entweder über das dritte Kommunikationsnetz oder auch ein viertes Kommunikationsnetz übermittelt werden.

Die verschiedenen Telekommunikationsnetze können entweder Festnetze oder Mobilfunknetze sein.

Vorzugsweise enthält das erste die Verbindung aufbauende Endgerät einen Speicher zur Aufnahme von Identifikations- und Zugangsdaten. Bei den Identifikationsdaten handelt es sich dabei im wesentlichen um die sogenannte PIN (Personal Identification Number). Die Zugangsdaten sind ein spezieller Code des zweiten Netzbetreibers, der eine Freischaltung des entsprechendes Dienstes des zweiten Netzbetreibers ermöglicht. Durch Betätigung eines Auslösemittels, insbesondere einer entsprechenden Taste am die Verbindung aufbauenden Endgerät wird vorzugsweise zunächst die Zugangsnummer des zweiten Netzbetreibers gewählt, dem unmittelbar im Anschluß daran oder nach einer Pause die Identifikationsdaten des Nutzers und der Zugangscode des zweiten Netzbetreibers folgen. Nach Freigabe des angewählten Dienstes durch den zweiten Netzbetreiber wählt das erste Endgerät dann die Anwahlnummer des zweiten Endgerätes.

Vorzugsweise sind die Identifikationsdaten des Endgerätes auf einer auswechselbaren Speichereinheit, z. B. einer sogenannten SIM-Karte, oder einem geräteinternen Festspeicher gespeichert. Die Zugangsdaten des Dienstes des zweiten Netzbetreibers können ebenfalls auf der SIM-Karte oder einem internen Speicher gespeichert werden: wobei sie entweder bereits bei der Anschaffung des Endgerätes gespeichert werden, oder vorzugsweise bei der erstmaligen Übertragung einer sogenannten SMS-Nachricht an das Endgerät übermittelt werden. Die gespeicherte SMS-Nachricht steht künftig für den Aufbau des erfindungsgemäßen Dienstes zur Verfügung. Die Übertragung als SMS-Nachricht hat insbesondere den Vorteil der Erhöhung der Sicherheit, da es den Netzbetreibern somit ständig möglich ist, durch Neuaussendung von neuen SMS-Nachrichten die Zugangscodes für den zweiten Netzbetreiber zu ändern. Dies kann insbesondere dann von Vorteil sein, wenn entsprechende Codes bekannt geworden sind oder wenn der erste Netzbetreiber aufgrund geänderter Tarifstrukturen des zweiten Netzbetreibers eine alternative Geschäftsverbindung mit einem anderen Netzbetreiber eingehen möchte.

Zur Erfassung der Gesprachsdaten des Nutzers wird von dem ersten Netzbetreiber die Zeit und die Gesprächsdauer zusammen mit der Identifikation des Nutzers erfaßt. Ferner wird Zeit und Dauer der Nutzung des Kommunikationskanals vom zweiten Netzbetreiber erfaßt und es wird im Gegencheckverfahren geprüft, ob die Nutzungsdaten übereinstimmen, um so beispielsweise feststellen zu können, ob nicht über den ersten Netzbetreiber erfolgte Inanspruchnahmen des Dienstes des zweiten Netzbetreibers aufgetreten sind.

Ein Endgerät zur Durchführung der genannten Verfahren enthält vorzugweise eine zweite Gesprächstaste, wobei die erste Gesprächstaste weiterhin zum Aufbau einer üblichen Kommunikationsverbindung verwendbar ist. Die zweite Gesprächstaste ermöglicht es, das Telekommunikationsnetz und den entsprechenden Dienst des zweiten Netzbetreibers unmittelbar anzuwählen. Der Nutzer hat damit die Wahl der Verwendung des üblichen Netzaufbaus und alternativ dazu die Verwendung des Dienstes des zweiten Netzbetreibers.

In einer weitergehenden Ausgestaltung der Erfindung kann auch vorgesehen sein, das Endgerät so zu automatisieren, daß bei Wahl der einzigen Gesprächstaste zunächst ein Verbindungsversuch zum zweiten Netzbetreiber erstellt wird und bei Fehlschlagen eines entsprechenden Zugangs auf den üblichen Netzaufbau ohne Einschaltung des zweiten Netzbetreibers zuruckgeschaltet wird.

Die Erfindung ermöglicht es, ohne Erhöhung des Aufwands zur Anwahl eines Endgerätes, durch Verwendung und Ausnutzung unterschiedlicher Tarifstrukturen verschiedener Netzbetreiber die Verbindungskosten von Telekommunikationsverbindungen, insbesondere im Mobilfunkbereich, zu reduzieren.

Die Erfindung ist nicht auf die Sprachkommunikation beschränkt, sondern kann auch für die Datenübertragung verwendet werden.

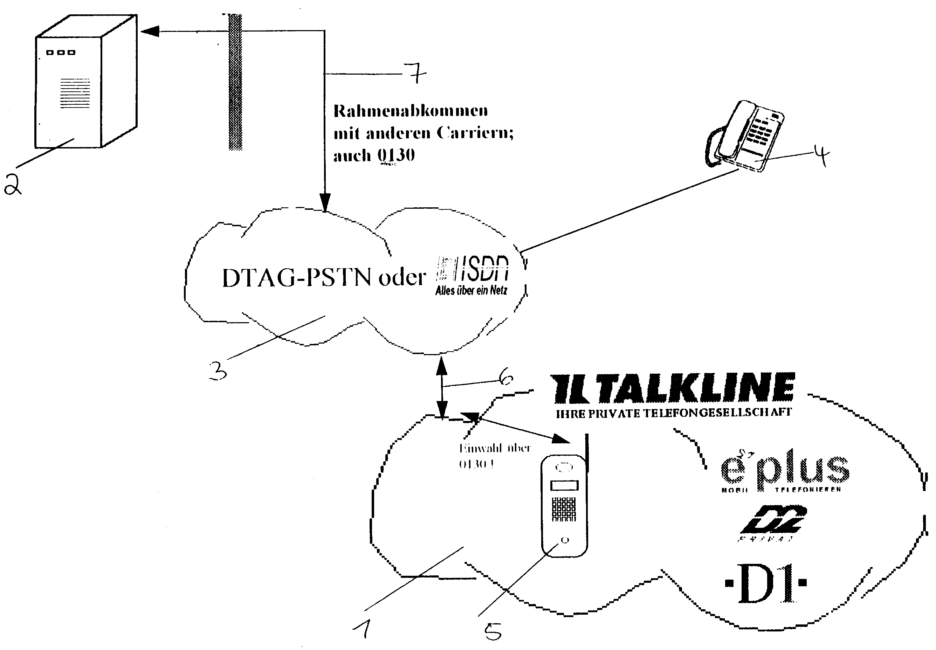

Die Erfindung wird nachstehend anhand eines Ausführungsbeispiels näher erläutert. Die Figur zeigt den schematischen Aufbau einer erfindungsgemäßen Telekommunikationsverbindung.

Dabei ist angenommen, daß sich das Mobilfunkendgerät 5 im Bereich eines Telekommunikationsnetzes 1 eines ersten Netzbetreibers befindet, beispielsweise der Netze E+, D2 oder D1. Durch Anwahl einer entsprechenden Taste am Endgerät sendet das Endgerät eine Anwahlnummer des zweiten Netzbetreibes 2 aus, wobei beispielsweise die Nummer 0130 als Zugangsnummer gewählt wird, die einen kostenfreien Zugang zum Netzbetreiber 2 ermöglicht. Die Verbindung zum Netzbetreiber 2 erfolgt dabei über ein drittes Netz 3, das beispielsweise ein anderes Mobilfunknetz oder auch ein Festnetz sein kann.

Der Netzbetreiber 2 befindet sich dabei im Ausland, wobei vor allem ein solcher Netzbetreiber eingeschaltet wird, der eine erheblich günstigere Tarifstruktur als entsprechende nationale Netzbetreiber anbietet.

Nachdem die Verbindung zum zweiten Netzbetreiber 2 hergestellt ist, übermittelt das Endgerät 5 zusammen mit einem Identifikationscode (PIN) den Zugangscode zum angewählten Dienst des zweiten Netzbetreibers 2. Unmittelbar im Anschluß daran, kann entweder automatisch vom Endgerät oder vom Nutzer (nach Erscheinen einer Connect-Mitteilung im Display des Endgeräts) die anzuwählende Nummer des zweiten Endgerätes 4 eingegeben werden. Dadurch erfolgt der Verbindungsaufbau zum zweiten Endgerät 4. Alternativ kann zur Identifikation das Endgerät 5 vom Netzbetreiber 2 die von den Netzen übemittelte Teilnehmerrufnummer des Endgerätes 5 verwendet werden.

Damit der Nutzer keine Kenntnis vom Zugangscode des zweiten Netzbetreibers 2 erhält, werden die entsprechenden Zugangsdaten mittels SMS-Übertragung vom ersten Netzbetreiber an das erste Endgerät 5 übermittelt und auf einer SIM-Karte oder in einem wiederbeschreibbaren Festspeicher des Endgerätes gespeichert. Gleichzeitig kann auch die Zugangsnummer des zweiten Netzbetreibers gespeichert sein. Sollte sich herausstellen, daß die Zugangsdaten des zweiten Netzbetreibers öffentlich geworden seien und damit beispielsweise auch aus einem Festnetz heraus ohne weitere Kontrolle verwendbar wären, besteht für den ersten Netzbetreiber die Möglichkeit, durch Aussendung neuer SMS-Nachrichten den Teilnehmern der Dienste neue Zugangscodes zu übermitteln, um weiter gesicherte Verbindungen zum zweiten Netzbetreiber herstellen zu können.

Die Abrechnung der Nutzungsdaten erfolgt nach folgendem Schema:

Vom ersten Netzbetreiber 1 werden Zeit und Dauer sowie Identifikationsdaten für die vom Nutzer geführten Gespräche erfaßt. Ferner werden vom zweiten Netzbetreiber 2 die Zeit und die Dauer der jeweils durchgeschalteten Verbindungen festgestellt, so daß die Nutzungsdaten der beiden Netzbetreiber 1 und 2 miteinander korreliert werden können. Sollten sich Abweichungen herausstellen, deutet dies auf Sicherheitsprobleme hin, die beispielsweise in einer Änderung der als SMS-Daten zu übertragenden Zugangscodes resultieren können.

Die Übertragung einer SMS-Nachricht wird an das Endgerät immer dann zugestellt, wenn sich der Nutzer des Endgerätes in sein Netz anwählt. Nach Speicherung der SMS-Nachricht ist das Endgerät in der Lage, den erfindungsgemäßen Dienst zu nutzen.

Endgeräte, die keine SMS-Nachricht erhalten, können den erfindungsgemäßen Dienst nicht nutzen, sie können jedoch über die verbliebene "normale" Gesprächstaste weiterhin auf üblichem Wege am Mobilfunkdienst teilnehmen.

Der Zugangscode bzw. die SMS-Nachricht kann zusätzliche Codestellen enthalten, die eine nationale Zuordnung oder eine gesonderte Präfixnummer für den Zugang zu weiteren Fest- oder Mobilfunkdiensten, die z. B. dem Endgerät 4 zugeordnet sind, enthalten. Je nach nationalen Gegebenheiten können damit z. B. für Nutzer in unterschiedlichen Ländern unterschiedliche Zugangsdaten und Codes bereit gestellt werden.

Es ist darauf hinzuweisen, daß die als SMS-Nachricht übermittelten Zugangsdaten gegen Einsichtnahme gesichert sein müssen. Da die Nutzung der Zugangsdaten bei Verwendung im Mobilfunknetz nur im Zusammenhang mit der persönlichen Identifikationsnummer möglich ist, ist eine weitestgehende Sicherheit gegen Mißbrauch gewährleistet.

Sofern ein Kunde auf ein neues Gerät umsteigen möchte, stehen ihm Zugangsdaten zum zweiten Festnetz zunächst nicht zur Verfügung. Erst durch gezielte Aussendung einer SMS-Nachricht seitens des Serviceproviders oder des ersten Festnetzbetreibers kann der Dienst zur Verfügung gestellt werden.

## Patentansprüche

1. Verfahren zum Aufbau einer Wählverbindung zwischen zwei Telekommunikationsendgeräten (4, 5) über Telekommunikationsnetze wenigstens eines ersten Netzbetreibers (1) und eines zweiten Netzbetreibers (2), bei dem das die Verbindung aufbauende Endgerät (5) über das Netzwerk des ersten Netzbetreibers (1) eine Zugangsnummer des zweiten Netzbetreibers (2) anwählt und nach Freigabe des Zugangs und des Dienstes des die Verbindung aufbauenden Endgerätes (5) durch den zweiten Netzbetreiber (2) die Anwahl des zweiten Endgerätes (4) erfolgt.

2. Verfahren nach Anspruch 1, dadurch gekennzeichnet, daß das Telekommunikationsnetz (1) des ersten Netzbetreibers ein Mobilfunknetz ist, daß die Anwahl des Telekommunikationsnetzes des zweiten Netzbetreibers (2) über ein drittes Fest- oder Mobilfunknetz (3) erfolgt, und daß die Anwahl des zweiten Endgerätes (4) vom Telekommunikationsnetz des zweiten Netzbetreibers (2) über das dritte (3) oder ein viertes Telekommunikationsnetz erfolgt.

3. Verfahren nach Anspruch 1 oder 2, bei dem das erste Endgerät (5) einen Speicher zur Aufnahme von Identifikations- und Zugangsdaten enthält, dadurch gekennzeichnet, daß zum Aufbau der Wählverbindung das erste Endgerät (5) bei Betätigung eines Auslösemittels durch den Benutzer die Zugangsnummer des zweiten Netzbetreibers (2) zusammen mit den gespeicherten Identifikations- und Zugangsdaten aussendet, und daß nach Freigabe des Dienstes des zweiten Netzbetreibers (2) das erste Endgerät (5) die Anwahlnummer des zweiten Endgeräts (4) überträgt.

4. Verfahren nach Anspruch 3, dadurch gekennzeichnet, daß die Identifikationsdaten des ersten Endgerätes (5) auf einer auswechselbaren Speichereinheit (SIM) oder einem internen Speicher des Endgerätes gespeichert sind.

5. Verfahren nach Anspruch 3, dadurch gekennzeichnet, daß die Zugangsdaten des Dienstes des zweiten Netzbetreibers (2) durch an sich bekannte SMS-Übertragung an das erste Endgerät (5) übertragen und darin gespeichert werden.

6. Verfahren nach einem oder mehreren der vorhergehenden Ansprüche, bei dem die Gesprächsdaten einer Wählverbindung wenigstens mit Zeit und Dauer der Verbindung durch den ersten Netzbetreiber erfaßt werden, dadurch gekennzeichnet, daß der zweite Netzbetreiber (2) ebenfalls Zeit und Dauer der Verbindung erfaßt, und daß ein Abgleich der vom ersten und zweiten Netzbetreiber erfaßten Gesprächsdaten erfolgt.

7. Endgerät zur Nutzung eines Verfahrens nach Anspruch 1, mit einer Gesprächstaste zum Aufbau einer Verbindung zum zugeordneten Netzbetreiber (1), dadurch gekennzeichnet, daß eine zweite Gesprächstaste vorgesehen ist, bei deren Betätigung einer Anwahl des zweiten Netzbetreibers (2) erfolgt.

8. Einrichtung nach Anspruch 7, bei der das erste Endgerät (5) ein Mobilfunkendgerät ist, das einen Speicher (SIM) zur Speicherung von Identifikations- und Zugangsdaten enthält und eine Empfangseinheit zur Annahme und Speicherung von SMS-Daten aufweist, dadurch gekennzeichnet, daß bei Betätigung der zweiten Gesprächstaste die Zugangsnummer des zweiten Netzbetreibers (2), die Identifikationsdaten des ersten Endgerätes (5) sowie der Zugangscode des Dienstes des zweiten Netzbetreibers (2) ausgesendet werden, wobei die Zugangsdaten als gespeicherte SMS-Daten des ersten Endgeräts (5) zur Verfügung gestellt werden.
